# EUROPEAN PATENT APPLICATION

(11) **EP 3 825 816 A1**
(43) Date of publication of application: **26.05.2021**
(21) Application number: 19211047.6
(22) Date of filing: 22.11.2019
(51) Int. Cl.: G06F 3/01

(54) **RENDERING A VIRTUAL OBJECT ON A VIRTUAL USER INTERFACE**

(71) Applicant: Koninklijke Philips N.V., 5656 AG Eindhoven (NL)
(72) Inventor: BUIL, Vincentius Paulus, 5656 AE Eindhoven (NL); TALGORN, Elise Claude Valentine, 5656 AE Eindhoven (NL); CHEN, Njin-Zu, 5656 AE Eindhoven (NL); DJAJADININGRAT, Johan Partomo, 5656 AE Eindhoven (NL); HABETS, Hugo, 5656 AE Eindhoven (NL)
(74) Representative: Philips Intellectual Property & Standards

(57) **Abstract**

There is provided an apparatus that comprises one or more processors configured to control a first virtual user interface of a first augmented reality (AR), mixed reality (MR) or virtual reality (VR) device used by a first user (300) to render a virtual object (306), detect a gesture performed by a part (316) of the body of at least one second user (302) in relation to a part of the virtual object (308) rendered on a second virtual user interface of a second AR, MR, or VR device used by the at least one second user (302), and control the first virtual user interface to render a first virtual representation of the part (318) of the body, such that the gesture performed by the first virtual representation of the part (318) of the body is in relation to the same part of the virtual object (306).

## Description

### FIELD OF THE INVENTION

The disclosure relates to a computer-implemented method and apparatus for rendering a virtual object on a virtual user interface of an augmented reality (AR), mixed reality (MR), or virtual reality (VR) device.

### BACKGROUND OF THE INVENTION

It is expected that, in the future, virtual user interfaces (such as those used for AR, MR and VR) will become omnipresent. These virtual user interfaces can be used to provide information to individual users as well as to support discussions between several users by enabling them to naturally share information. It is seen as advantageous to use virtual user interfaces in teleconferencing applications as virtual user interfaces can immerse users and create a sense of the users being together, even when they are physically miles apart.

There exist techniques that can teleport a first user (e.g. captured by three-dimensional imaging) into an augmented reality world of a second user. For example, US 2002/0080094 discloses a teleport system which provides remote communication between at least two users. In this teleport system, a projective display unit provides an augmented reality environment to each user and allows users to view, unobstructed, the other local users, and view a local site in which they are located. There also exist techniques for allowing remote parties to work together on a centralized virtual model, with each user wearing a mixed reality headset and seeing the other users as avatars within the same room. Apart from teleporting full bodies or objects to another location, there also exist techniques for teleporting part of a body or object to another location.

However, there are some limitations with the existing techniques. In a collaborative work environment, where users are viewing and discussing the same virtual object, the users may prefer to see the virtual object from the same viewpoint when working together on a particular part of that virtual object. For example, if users are discussing a three-dimensional medical volume, such as the human heart, they may all want to see a particular view (e.g. the anterior view) of that three-dimensional volume when discussing certain aspects of the anatomy. In order to achieve this, existing techniques position all users at one side of the virtual object. However, this can be disadvantageous. For example, if a user wants to look closely at the virtual object from the same viewpoint as another user, the virtual bodies of the user will be in close proximity to one another or even merge, which can feel socially awkward for the users. Also, from a social interaction point of view, it is beneficial for users to comfortably see each other's faces while discussing a virtual object, so that they can read emotions and responses. This is not possible when the users are all positioned at one side of the virtual object because the users are required to glance sideways to see the faces of other users. Moreover, if a user moves closer to the virtual object when all users are at one side of the virtual object, this user may obstruct the other users' view of the virtual object.

In view of this, users may prefer to stand or sit so that they can see each other as well as the virtual object. However, the issue with this is that the users then do not have the same viewpoint of the virtual object. For example, one user may be viewing the anterior aspect of the virtual object, while another user may be viewing the posterior aspect of the virtual object. As such, when a user performs a gesture, such as a pointing gesture, in relation to a particular part of the virtual object that they see from their viewpoint, another user may not be able to see that particular part of the virtual object. It can therefore be difficult for a user to comprehend the gestures of other users in relation to a virtual object rendered according to these existing techniques, which can be inconvenient and ineffective for the collaboration between all users.

### SUMMARY OF THE INVENTION

As noted above, the limitations with existing techniques is that it is difficult for users to comprehend the gestures of other users in relation to a virtual object, which can be inconvenient and confusing for the user. It would thus be valuable to have an improvement aimed at addressing these limitations.

Therefore, according to a first aspect, there is provided an apparatus for rendering a virtual object on a virtual user interface of an augmented reality (AR), mixed reality (MR), or virtual reality (VR) device. The apparatus comprises one or more processors configured to control a first virtual user interface of a first AR, MR, or VR device used by a first user to render a virtual object and acquire, from at least one sensor, information indicative of a movement of at least one second user. The one or more processors are configured to detect, from the acquired information, a gesture performed by a part of the body of the at least one second user in relation to a part of the virtual object rendered on a second virtual user interface of a second AR, MR, or VR device used by the at least one second user. The one or more processors are configured to control the first virtual user interface to render a first virtual representation of the part of the body of the at least one second user performing the gesture, such that the gesture performed by the first virtual representation of the part of the body of the at least one second user is in relation to the same part of the virtual object.

In some embodiments, the one or more processors may be configured to control the first virtual user interface to render the virtual object in the same orientation with respect to the first user as the virtual object is rendered on the second virtual user interface with respect to the at least one second user.

In some embodiments, the one or more processors may be configured to acquire a mapping of a position of the part of the body of the at least one second user to a position of the part of the virtual object and control the first virtual user interface to render the first virtual representation of the part of the body of the at least one second user based on the mapping, such that the gesture performed by the first virtual representation of the part of the body of the at least one second user is in relation to the same part of the virtual object.

In some embodiments, the one or more processors may be configured to control the first virtual user interface to render a virtual representation of the body of the at least one second user. In some embodiments, the one or more processors may be configured to control the first virtual user interface to render the virtual representation of the body of the at least one second user at the same location as the body of the first user or at a predefined distance from the body of the first user.

In some embodiments, the one or more processors may be configured to control the first virtual user interface to render a posture and/or movement of the virtual representation of the body of the at least one second user to match the posture and/or movement of the body of the at least one second user.

In some embodiments, the one or more processors may be configured to control the first virtual user interface to render the first virtual representation of the part of the body of the at least one second user only when the part of the body of the at least one second user is within a predefined volume around the virtual object rendered on the second virtual user interface.

In some embodiments, the virtual representation of the body of the at least one second user may comprise a second virtual representation of the part of the body of the at least one second user only until the part of the body of the at least one second user is within the predefined volume.

In some embodiments, the one or more processors may be configured to control the first virtual user interface to render the virtual object in a first view of a virtual environment.

In some embodiments, the first view of the virtual environment may be the same as a second view of the virtual environment in which the virtual object is rendered on the second virtual user interface or the first view of the virtual environment may be rotated around the virtual object relative to a second view of the virtual environment in which the virtual object is rendered on the second virtual user interface. In some embodiments, the first view of the virtual environment may be rotated around the virtual object according to the position of a virtual representation of the first user rendered on the second virtual user interface.

In some embodiments, the one or more processors may be configured to, if the virtual object rendered on the second virtual user interface is changed by the at least one second user, control the first virtual user interface to render the same change to the virtual object or control the first virtual user interface to render the virtual object without the change to the virtual object.

In some embodiments, the first AR, MR, or VR device may comprise a first head-mounted AR, MR, or VR device and/or the second AR, MR, or VR device may comprise a second head-mounted AR, MR, or VR device.

According to a second aspect, there is provided a computer-implemented method for rendering a virtual object on a virtual user interface of an augmented reality (AR), mixed reality (MR), or virtual reality (VR), device. The method comprises controlling a first virtual user interface of a first AR, MR, or VR device used by a first user to render a virtual object and acquiring, from at least one sensor, information indicative of a movement of at least one second user. The method comprises detecting, from the acquired information, a gesture performed by a part of the body of the at least one second user in relation to a part of the virtual object rendered on a second virtual user interface of a second AR, MR, or VR device used by the at least one second user. The method comprises controlling the first virtual user interface to render a first virtual representation of the part of the body of the at least one second user performing the gesture, such that the gesture performed by the first virtual representation of the part of the body of the at least one second user is in relation to the same part of the virtual object.

According to a third aspect, there is provided a computer program product comprising a computer readable medium. The computer readable medium has a computer readable code embodied therein. The computer readable code is configured such that, on execution by a suitable computer or processor, the computer or processor is caused to perform the method described earlier.

According to the aspects and embodiments described above, the limitations of existing techniques are addressed. In particular, according to the above-described aspects and embodiments, when the at least one second user performs a gesture in relation to a part of the virtual object rendered on the virtual user interface of their AR, MR, or VR device, the gesture appears to the first user to be in relation to the correct part of the virtual object rendered on the virtual user interface of their AR, MR, or VR device. The part of the virtual object indicated by the at least one second user matches the part of the virtual object that the first user sees the at least one second user indicating. This makes it possible for the first user to easily comprehend the gestures of the at least one second user. In this way, the users are able to face each other to facilitate social interaction and yet each user can be provided with the same viewpoint on the virtual object, which can be particularly beneficial in facilitating collaborative work. There is thus provided an improved technique for rendering a virtual object on a virtual user interface of an AR, MR, or VR device.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a schematic illustration of an apparatus according to an embodiment;
Fig. 2 is a flow chart illustrating a method according to an embodiment;
Figs. 3-4 are schematic illustrations of virtual user interfaces per user according to some examples;
Fig. 5 is a schematic illustration of example positions of users in a shared virtual environment; and
Figs 6-9 are schematic illustrations of virtual user interfaces per user according to some examples.

### DETAILED DESCRIPTION OF EMBODIMENTS

As noted above, there is provided herein an improved technique for rendering a virtual object on a virtual user interface of an augmented reality (AR), mixed reality (MR), or virtual reality (VR) device. The term "virtual user interface" referred to herein can be any user interface that is capable of rendering an object virtually. A virtual user interface may, for example, be shown on a two-dimensional (2D) display such as a flat 2D display, a three-dimensional (3D) display such as a flat 3D display, a head-mounted display such as a monocular or binocular head-mounted display, or on any other visual user interface. The term "virtual object" referred to herein can be any object rendered virtually on a user interface. A virtual object can be a virtual representation of a physical (or real) object. The virtual object referred to herein can, for example, comprise a virtual representation of a medical object, such as an anatomical structure (e.g. an organ, such as a heart), or any other physical object. The virtual object referred to herein may be a 2D or 3D virtual object. In some embodiments, the virtual object may be a virtual, computer generated model. The virtual object can comprise image data.

A virtual object is rendered on a virtual user interface of an AR, MR or VR device. It will be understood that an AR device can refer to any device that is capable of rendering a virtual object in a live view of a physical environment. For example, an AR device can be a smartphone or tablet. A VR device can refer to any device that is capable of rendering a virtual object in a completely virtual environment (and thus which shuts out the physical environment). An MR device can refer to any device that is capable of combining elements of both AR and VR devices. For example, an MR device can refer to a device that allows a physical object to interact with a virtual object.

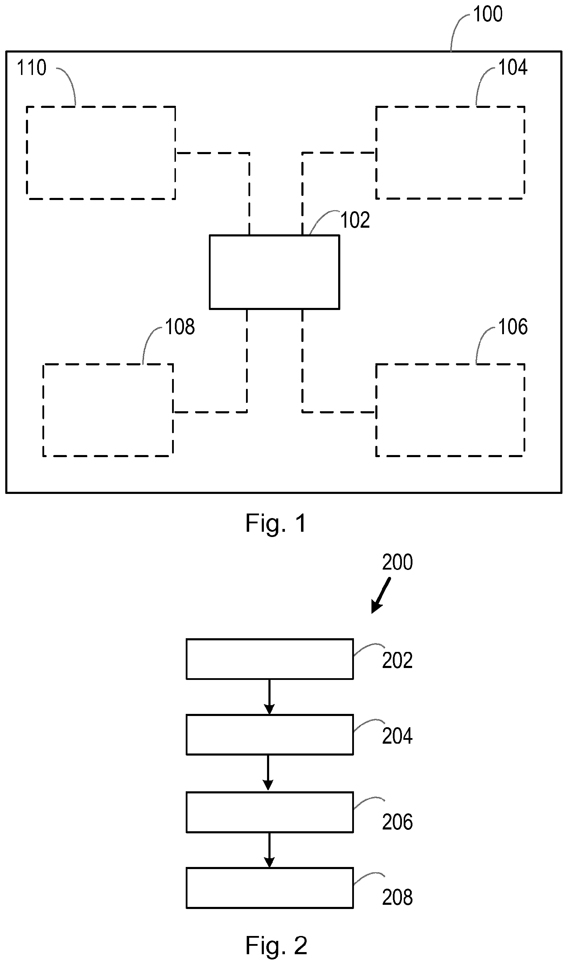

Fig. 1 illustrates an apparatus 100 for rendering a virtual object on a virtual user interface of an AR, MR, or VR device according to an embodiment. As illustrated in Fig. 1, the apparatus 100 comprises one or more processors 102.

The one or more processors 102 can be implemented in numerous ways, with software and/or hardware, to perform the various functions described herein. In particular implementations, the one or more processors 102 can comprise a plurality of software and/or hardware modules, each configured to perform, or that are for performing, individual or multiple steps of the method described herein. The one or more processors 102 may comprise, for example, one or more microprocessors, one or more multi-core processors and/or one or more digital signal processors (DSPs), one or more processing units, and/or one or more controllers (e.g. one or more microcontrollers) that may be configured or programmed (e.g. using software or computer program code) to perform the various functions described herein. The one or more processors 102 may be implemented as a combination of dedicated hardware (e.g. amplifiers, pre-amplifiers, analog-to-digital convertors (ADCs) and/or digital-to-analog convertors (DACs)) to perform some functions and one or more processors (e.g. one or more programmed microprocessors, DSPs and associated circuitry) to perform other functions.

Briefly, one or more processors 102 of the apparatus 100 are configured to control a first virtual user interface of a first AR, MR, or VR device used by a first user to render (e.g. display) a virtual object. The one or more processors 102 of the apparatus 100 are configured to acquire, from at least one sensor 104, information indicative of a movement of at least one second user and detect, from the acquired information, a gesture performed by a part of the body of the at least one second user in relation to a part of the virtual object rendered (e.g. displayed) on a second virtual user interface of a second AR, MR, or VR device used by the at least one second user. The one or more processors 102 of the apparatus 100 are configured to control the first virtual user interface to render (e.g. display) a first virtual representation of the part of the body of the at least one second user performing the gesture, such that the gesture performed by the first virtual representation of the part of the body of the at least one second user is in relation to the same part of the virtual object.

In some embodiments, the first AR, MR, or VR device can comprise the apparatus 100 described herein. Alternatively or in addition, the second AR, MR, or VR device can comprise the apparatus 100 described herein. Alternatively, the apparatus 100 described herein may be a separate apparatus to the first AR, MR, or VR device and/or the second AR, MR, or VR device.

In some embodiments, the first AR, MR, or VR device referred to herein may comprise a first head-mounted AR, MR, or VR device (such as a first pair of AR, MR, or VR glasses or a first AR, MR, or VR headset) worn by the first user, a first mobile device (e.g. phone, smartphone, tablet, etc.) used by the first user, or any other type of AR, MR, or VR device. Alternatively or in addition, in some embodiments, the second AR, MR, or VR device may comprise a second head-mounted AR, MR, or VR device (such as a second pair of AR, MR, or VR glasses or a second AR, MR, or VR headset) worn by the at least one second user, a second mobile device (e.g. phone, smartphone, tablet, etc.) used by the at least one second user, or any other type of AR, MR, or VR device.

The at least one second user can interact with the virtual object by way of a gesture. The term "gesture" referred to herein can be any gesture or any combination of gestures. A gesture can comprise any (e.g. recognizable) movement of the part of the body of the at least one second user. A gesture can, for example, comprise one or more gestures of an arm, a hand and/or a digit (e.g. one or more fingers and/or the thumb) of a hand of the body of the at least one second user. Examples of a gesture include, but are not limited to, a pointing gesture, a tapping gesture, a pressing gesture, a scrolling gesture, a dragging gesture, a spreading gesture, a pinching gesture, a sliding gesture, a circling gesture, or any other gesture, or any combination of gestures. The gesture may comprise a gesture having a horizontal displacement and/or a vertical displacement. For example, a gesture may comprise a symmetrical gesture, such as a gesture that has zero horizontal displacement (e.g. pointing, tapping, pressing, vertical scrolling, vertical dragging, vertical spreading, etc.). Alternatively or in addition, a gesture may comprise an asymmetrical gesture, such as a gesture that has a non-zero horizontal displacement (e.g. circling, horizontal scrolling, dragging, spreading, pinching, etc.).

The gesture referred to herein may be associated with an action in respect of the virtual object. Examples of an action include, but are not limited to, grabbing the virtual object, re-positioning the virtual object, re-orientating the virtual object (e.g. translating the virtual object along and/or rotating the virtual object around any one or more of an x-axis, a y-axis and a z-axis), re-sizing (e.g. magnifying or shrinking) the virtual object, placing cut planes in the virtual object, adding information (e.g. measurements, annotations and/or any other information) to the virtual object, segmenting (e.g. selecting a layer of) the virtual object, altering a property (e.g. brightness, contrast, window adjustment and/or any other property) for the virtual object, or any other action, or any combination of actions.

As illustrated in Fig. 1, in some embodiments, the apparatus 100 may comprise at least one sensor 104. Alternatively or in addition, in some embodiments, at least one sensor 104 may be external to (e.g. separate to or remote from) the apparatus 100. For example, another apparatus may comprise at least one sensor 104 according to some embodiments. In some embodiments, any one or more of the first AR, MR, or VR device and the second AR, MR, or VR device may comprise at least one sensor 104. The at least one sensor 104 is configured to obtain information indicative of the movement of the at least one second user. Thus, the at least one sensor 104 referred to herein may also be referred to as a movement (or motion) sensor.

Examples of the at least one sensor 104 include, but are not limited to one or more sensors (e.g. in a glove) worn on the part (e.g. a hand) of the body of the at least one second user that performs the gesture, one or more sensors (e.g. in a tool or controller) held by the part (e.g. a hand) of the body of the at least one second user that performs the gesture, one or more cameras of the second AR, MR, or VR device used by the at least one second user, one or more cameras located in the environment of the at least one second user, or any other sensor, or any combination of sensors, suitable for obtaining information indicative of the movement of the at least one second user.

In some embodiments involving one or more sensors (e.g. in a tool or controller) held by the part (e.g. a hand) of the body of the at least one second user that performs the gesture, the one or more sensors (e.g. in a tool or controller) may be passed to the first user after the at least one second user performs the gesture in order for the first user to perform a gesture. In this case, the method described herein in respect of the first user can be performed in respect of the at least one second user and vice versa. Thus, in some embodiments, one or more sensors (e.g. in a tool or controller) may be passed between users. In this way, a clear means of control can be provided since it is apparent to the users that the user holding the one or more sensors (e.g. in a tool or controller) is in control of an operation. In other embodiments, each user may have their own one or more sensors (e.g. in a tool or controller). This can allow for simultaneous and/or collaborative actions (e.g. manipulation) being performed in respect of the virtual object through the gestures performed by the users. In some of these embodiments, one or more actions (e.g. displacement, rotation, and/or sizing) in respect of the virtual object may be restricted to one user at a time. In this way, only one user at a time is able to interact with the virtual object, which avoids any possible interaction conflicts.

As illustrated in Fig. 1, in some embodiments, the apparatus 100 may comprise at least one memory 106. Alternatively or in addition, in some embodiments, at least one memory 106 may be external to (e.g. separate to or remote from) the apparatus 100. For example, another apparatus may comprise at least one memory 106 according to some embodiments. In some embodiments, a hospital database may comprise at least one memory 106, at least one memory 106 may be a cloud computing resource, or similar. The one or more processors 102 of the apparatus 100 may be configured to communicate with and/or connect to at least one memory 106. The at least one memory 106 may comprise any type of non-transitory machine-readable medium, such as cache or system memory including volatile and non-volatile computer memory such as random access memory (RAM), static RAM (SRAM), dynamic RAM (DRAM), read-only memory (ROM), programmable ROM (PROM), erasable PROM (EPROM), and electrically erasable PROM (EEPROM). In some embodiments, at least one memory 106 can be configured to store program code that can be executed by the one or more processors 102 of the apparatus 100 to cause the apparatus 100 to operate in the manner described herein.

Alternatively or in addition, at least one memory 106 can be configured to store information required by or resulting from the method described herein. For example, at least one memory 106 may be configured to store the virtual object to be rendered, the acquired information indicative of the movement of the at least one second user, an indication of whether a gesture performed by a part of the body of the at least one second user is detected, an indication of the part of the virtual object in relation to which the gesture is detected, the first virtual representation of the part of the body of the at least one second user to be rendered, or any other information, or any combination of information, required by or resulting from the method described herein. The one or more processors 102 of the apparatus 100 can be configured to control at least one memory 106 to store information required by or resulting from the method described herein.

As illustrated in Fig. 1, in some embodiments, the apparatus 100 may comprise at least one user interface 108. Alternatively or in addition, in some embodiments, at least one user interface 108 may be external to (e.g. separate to or remote from) the apparatus 100. The one or more processors 102 of the apparatus 100 may be configured to communicate with and/or connect to at least one user interface 108. In some embodiments, one or more processors 102 of the apparatus 100 can be configured to control at least one user interface 108 to operate in the manner described herein.

A user interface 108 can be configured to render (or output, display, or provide) information required by or resulting from the method described herein. For example, in some embodiments, one or more user interfaces 108 may be configured to render (or output, display, or provide) any one or more of the first and/or second virtual user interface, the acquired information indicative of the movement of the at least one second user, an indication of whether a gesture performed by a part of the body of the at least one second user is detected, an indication of the part of the virtual object in relation to which the gesture is detected, or any other information, or any combination of information, required by or resulting from the method described herein. Alternatively or in addition, one or more user interfaces 108 can be configured to receive a user input. For example, one or more user interfaces 108 may allow a user (e.g. the first user, the at least one second user, and/or another user) to manually or virtually (e.g. via the first virtual user interface and/or the second virtual user interface) enter information or instructions, interact with and/or control the apparatus 100. Thus, one or more user interfaces 108 may be any one or more user interfaces that enable the rendering (or outputting, displaying, or providing) of information and/or enables a user to provide a user input.

The user interface 108 may comprise one or more (virtual and/or real) components for this. For example, one or more user interfaces 108 may comprise one or more switches, one or more buttons, a keypad, a keyboard, a mouse, a display or display screen, a graphical user interface (GUI) such as a touch screen, an application (e.g. on a smart device such as a tablet, a smart phone, or any other smart device), or any other visual component, one or more speakers, one or more microphones or any other audio component, one or more lights (e.g. one or more light emitting diodes, LEDs), a component for providing tactile or haptic feedback (e.g. a vibration function, or any other tactile feedback component), a smart device (e.g. a smart mirror, a tablet, a smart phone, a smart watch, or any other smart device), or any other user interface, or combination of user interfaces. In some embodiments, one or more user interfaces that are controlled to render information may be the same as one or more user interfaces that enable the user to provide a user input.

As illustrated in Fig. 1, in some embodiments, the apparatus 100 may comprise at least one communications interface (or communications circuitry) 110. Alternatively or in addition, in some embodiments, at least one communications interface 110 may be external to (e.g. separate to or remote from) the apparatus 100. A communications interface 110 can be for enabling the apparatus 100, or components of the apparatus 100 (e.g. one or more processors 102, one or more sensors 104, one or more memories 106, one or more user interfaces 108 and/or any other components of the apparatus 100), to communicate with and/or connect to each other and/or one or more other components. For example, one or more communications interfaces 110 can be for enabling one or more processors 102 of the apparatus 100 to communicate with and/or connect to one or more sensors 104, one or more memories 106, one or more user interfaces 108 and/or any other components of the apparatus 100. Alternatively or in addition, one or more communications interfaces 110 can be for enabling one or more processors 102 of the apparatus 100 to communicate with and/or connect to the first AR, MR, or VR device and/or the second AR, MR, or VR device.

A communications interface 110 may enable the apparatus 100, or components of the apparatus 100, to communicate and/or connect in any suitable way. For example, one or more communications interfaces 110 may enable the apparatus 100, or components of the apparatus 100, to communicate and/or connect wirelessly, via a wired connection, or via any other communication (or data transfer) mechanism. In some wireless embodiments, for example, one or more communications interfaces 110 may enable the apparatus 100, or components of the apparatus 100, to use radio frequency (RF), WiFi, Bluetooth, 5G, or any other wireless communication technology to communicate and/or connect.

Fig. 2 illustrates a method 200 for rendering (e.g. displaying) a virtual object on a virtual user interface of an AR, MR, or VR, device according to an embodiment. More specifically, Fig. 2 illustrates a method 200 of operating the apparatus 100 described earlier with reference to Fig. 1 for rendering (e.g. displaying) a virtual object on a virtual user interface of an AR, MR, or VR, device. The method 200 illustrated in Fig. 2 is a computer-implemented method. As described earlier with reference to Fig. 1, the apparatus 100 comprises one or more processors 102. The method 200 illustrated in Fig. 2 can generally be performed by or under the control of one or more processors 102 of the apparatus 100 described earlier with reference to Fig. 1.

With reference to Fig. 2, at block 202, a first virtual user interface of a first AR, MR, or VR device used by a first user is controlled to render a virtual object. More specifically, the one or more processors 102 of the apparatus 100 control the first virtual user interface to render the virtual object.

In some embodiments, the one or more processors 102 of the apparatus 100 can be configured to control the first virtual user interface to render the virtual object in the same orientation with respect to the first user as the virtual object is rendered on the second virtual user interface with respect to the at least one second user. Thus, the first user and the at least one second user may see the virtual object in the same orientation. For example, the first and second user interface may be controlled to render the virtual object to be orientated to face the respective first user and at least one second user (e.g. all users may see the front of the virtual object). In other embodiments, the one or more processors 102 can be configured to control the first virtual user interface to render the virtual object with respect to the first user in a different orientation to the orientation in which the virtual object is rendered on the second virtual user interface with respect to the at least one second user.

In some embodiments, the one or more processors 102 of the apparatus 100 may be configured to control the first virtual user interface to continue to render the virtual object in the same orientation with respect to the first user when the first user moves (e.g. walks around) and/or changes posture (e.g. from standing to sitting or vice versa). For example, if the first user walks around the virtual object, the one or more processors 102 of the apparatus 100 may be configured to control the first virtual user interface to rotate the virtual object horizontally according to the movement of the first user. Similarly, for example, if the first user changes posture from sitting to standing or vice versa, the one or more processors 102 of the apparatus 100 may be configured to control the first virtual user interface to rotate the virtual object vertically according to the movement of the first user. In this way, the first user can keep the same viewpoint of the virtual object as other users. In the same manner, the second virtual user interface can be controlled to continue to render the virtual object in the same orientation with respect to the at least one second user when the at least one second user moves (e.g. walks around) and/or changes posture (e.g. from standing to sitting or vice versa) according to some embodiments.

In other embodiments, the orientation of the virtual object rendered on the first user interface may be locked in an initial orientation with respect to the first user and/or the orientation of the virtual object rendered on the second user interface may be locked in an initial orientation with respect to the at least one second user. In these embodiments, the orientation of the virtual object rendered on the first user interface remains fixed when the first user moves (e.g. walks around) and/or changes posture (e.g. from standing to sitting or vice versa). In the same manner, the orientation of the virtual object rendered on the second user interface may be locked in an initial orientation with respect to the at least one second user, such that the orientation of the virtual object rendered on the second user interface remains fixed when the at least one second user moves (e.g. walks around) and/or changes posture (e.g. from standing to sitting or vice versa).

In embodiments involving the movement and/or orientation of a user, at least one sensor can be configured to detect (e.g. track) the movement and/or posture of the user. Thus, the one or more processors 102 of the apparatus 100 can be configured to acquire information indicative of the movement and/or posture of the user from at least one sensor 104 according to these embodiments.

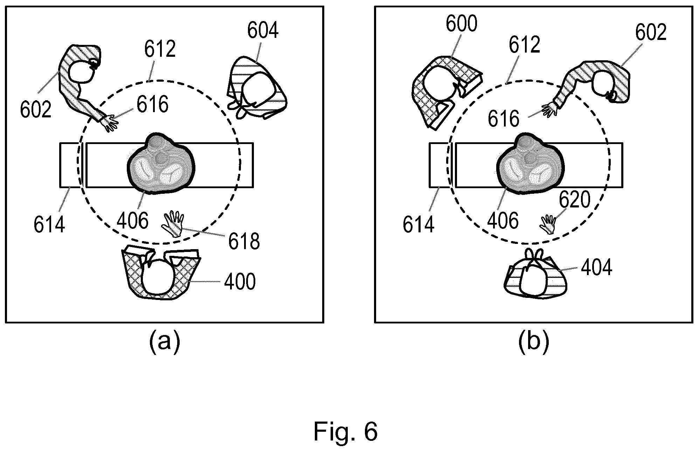

In some embodiments, the one or more processors 102 of the apparatus 100 may be configured to control the first virtual user interface to render the virtual object in a first view of a virtual environment (e.g. a virtual room). The virtual environment may comprise at least one other virtual object (e.g. a table, a bed, or any other object, or any combination of objects). In some of these embodiments, the virtual object may be rendered to float over the at least one other virtual object. In some embodiments, the first view of the virtual environment may be the same as a second view of the virtual environment in which the virtual object is rendered on the second virtual user interface. Thus, the first user and the at least one second user may see the same view of the virtual environment. In this way, the first user and the at least one second user can feel as if they are looking in the same direction in the virtual environment. An example of such an embodiment is described later with reference to Fig. 6.

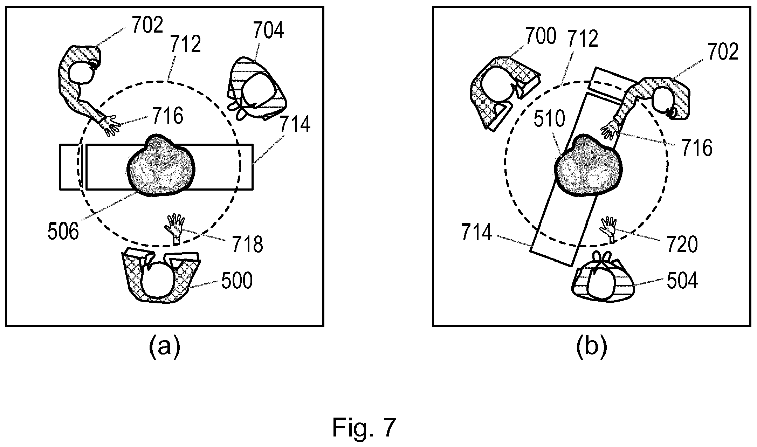

In other embodiments, the first view of the virtual environment may be rotated around (or about) the virtual object relative to a second view of the virtual environment in which the virtual object is rendered on the second virtual user interface. Thus, the first user and the at least one second user may see different (rotated) views of the virtual environment. In some of these embodiments, the first view of the virtual environment may be rotated around (or about) the virtual object according to the position of a virtual representation of the first user rendered on the second virtual user interface. For example, different views may be aligned with the respective positions of the virtual representations of the users in the virtual environment. In this way, the first user and the at least one second user can feel as if they are looking in different directions in the virtual environment. More specifically, each user can see the virtual environment from the position of their own virtual representation and perspective. This can be more congruent for the perception of the users. In some of these embodiments, the virtual object can remain in the same position in each of the views of the virtual environment. As such, the orientation of the virtual object can be decoupled from the virtual environment according to some embodiments. An example of such an embodiment is described later with reference to Fig. 7.

In other embodiments, the one or more processors 102 of the apparatus 100 may be configured to control the first virtual user interface to render the virtual object in a virtual environment that is different from a virtual environment in which the virtual object is rendered on the second virtual user interface. For example, in some embodiments, the virtual environment rendered on the first user interface may be selectable by the first user (e.g. via the communications interface 110). Similarly, the virtual environment rendered on the second user interface may be selectable by the at least one second user (e.g. via the communications interface 110). In this way, each user may view the virtual object in a personalized virtual environment. Examples of a virtual environment include, but are not limited to, a virtual cath lab environment, a virtual office environment, a virtual home environment, or any other virtual environment.

At block 204 of Fig. 2, information indicative of a movement of at least one second user is acquired from at least one sensor 104. More specifically, the one or more processors 102 of the apparatus 100 acquire the information from the at least one sensor 104. At block 206 of Fig. 2, a gesture performed by a part of the body of the at least one second user is detected from the acquired information. The gesture is performed by a part of the body of the at least one second user in relation to a part of the virtual object rendered on a second virtual user interface of a second AR, MR, or VR device used by the at least one second user. More specifically, the one or more processors 102 of the apparatus 100 detect the gesture. In some embodiments, a gesture performed by more than one part (e.g. both hands) of the body of the at least one second user may be detected in relation to a part of the virtual object rendered on a second virtual user interface of a second AR, MR, or VR device used by the at least one second user.

At block 208 of Fig. 2, the first virtual user interface is controlled to render a first virtual representation of the part of the body of the at least one second user performing the gesture, such that the gesture performed by the first virtual representation of the part of the body of the at least one second user is in relation to the same part of the virtual object. More specifically, the one or more processors 102 of the apparatus 100 control the first virtual user interface to render the first virtual representation of the part of the body of the at least one second user in this way. Effectively, the part of the body of the at least one second user performing the gesture is copied into the view of the first user.

The one or more processors 102 of the apparatus 100 may be configured to control the first virtual user interface to render the first virtual representation of the part of the body of the at least one second in the manner described in any suitable way. For example, in some embodiments, the one or more processors 102 of the apparatus 100 may be configured to acquire a mapping of a position of the part of the body of the at least one second user to a position of the part of the virtual object. Thus, in some embodiments, the position of the part of the body of the at least one second user in relation to the virtual object in the view of the at least one second user may be mapped to a position related to the virtual object in the view of the first user. In these embodiments, the one or more processors 102 of the apparatus 100 can be configured to control the first virtual user interface to render the first virtual representation of the part of the body of the at least one second user based on the mapping, such that the gesture performed by the first virtual representation of the part of the body of the at least one second user is in relation to the same part of the virtual object.

In some embodiments, the one or more processors 102 of the apparatus 100 may be configured to control the first virtual user interface to render the first virtual representation of the part of the body of the at least one second user only when the part of the body of the at least one second user is within a predefined volume (e.g. sphere, wall or any other shape volume) around the virtual object rendered on the second virtual user interface. The predefined volume can act as a type of portal, e.g. to teleport the part of the body. The predefined volume may also be referred to as a predefined teleport volume (e.g. teleport sphere or any other shape teleport volume). The predefined volume is larger than the virtual object. For example, in the case of a predefined spherical volume, the predefined spherical volume has a larger diameter than the virtual object. The predefined volume may be visible or invisible. In some visible embodiments, the predefined volume may be semi-transparent or visualized in any other way.

Although not illustrated in Fig. 2, in some embodiments, the one or more processors 102 of the apparatus 100 may be configured to control the first virtual user interface to render the physical (e.g. a live feed of the) body of the at least one second user. In other embodiments, the one or more processors 102 of the apparatus 100 may be configured to control the first virtual user interface to render a virtual representation of the body of the at least one second user. The virtual representation of the body of the at least one second user can, for example, be an avatar representing the at least one second user. In cases where one or more sensors (e.g. in a tool or controller) are held by the part of the body of the at least one second user that performs the gesture, the virtual representation of the body of the at least one second user may comprise a virtual representation of the one or more sensors (e.g. in the tool or controller) held by the part of the body of the at least one second user that performs the gesture.

In some of these embodiments, the one or more processors 102 of the apparatus 100 may be configured to control the first virtual user interface to render the virtual representation of the body of the at least one second user at the same location as the body of the first user. Thus, in some embodiments, there may be one (or a common) viewpoint for all users, such that all users see the virtual object from one position in the virtual environment. This can, for example, be advantageous in situations where the virtual object has a strong link to the virtual environment. For example, in obstetrics, users may want to see the orientation of a fetus within a mother on the bed/table within the exam room. Similarly, in a cath lab situation, it may be helpful to see a patient on a bed in the context of the equipment, while visualizing the catheter being fed into the veins and the heart.

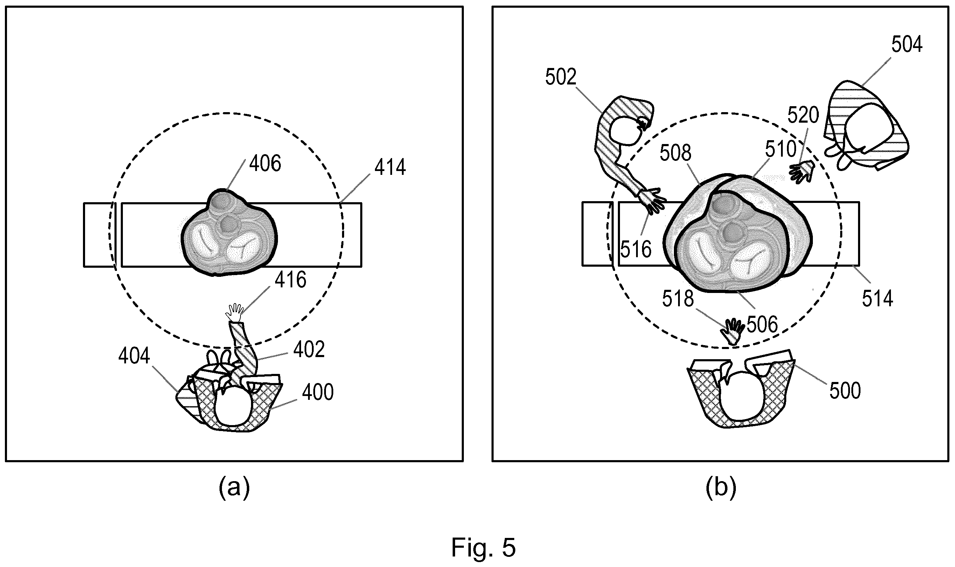

In other embodiments, the one or more processors 102 of the apparatus 100 may be configured to control the first virtual user interface to render the virtual representation of the body of the at least one second user at a predefined distance from the body of the first user. In some embodiments, there may be an equal spacing between each virtual representation of a user. In some of these embodiments, when an additional user joins, the virtual representations of the users may be repositioned to maintain the equal spacing. In this way, users do not intrude each other's (virtual) personal space, which can feel more comfortable for users when communication with each other. Examples of such embodiments are described later with reference to Figs. 5, 6 and 7.

In some embodiments, the virtual representations of the body of the users be positioned around the virtual object, e.g. in a circle with the virtual object at the center of the circle. In this way, the users can see each other's faces, e.g. during dialogues. The virtual representations of the body of the users may be positioned to face the virtual object. In some embodiments, the virtual representations of the body of the users may be positioned at a predefined distance from the virtual object that allows them to reach the virtual object. In some embodiments, the virtual representations of the body of the users may be positioned such that the virtual object does not block the line of sight between users. For example, the virtual object may be positioned below (or underneath) the line of sight, such that when users look up from the virtual object, the user sees at least a virtual head of a virtual representation of each of the other users (e.g. including the virtual head orientation). In some embodiments where the virtual representation of a user comprises a virtual head, the virtual head may comprise a virtual face. In some embodiments, the virtual face of the virtual representation of a user may be rendered to track emotional expressions and/or gaze directions of the respective user (e.g. showing whether the user is looking at the virtual model or at other users during a discussion).

In some embodiments, the one or more processors 102 of the apparatus 100 may be configured to control the first virtual user interface to render a posture and/or movement of the virtual representation of the body of the at least one second user to match the posture and/or movement of the body of the at least one second user. Thus, in some embodiments, the posture and/or movement of the physical body of the at least one second user can be tracked. The movement of the body of the at least one second may, for example, comprise a movement of a head of the user (e.g. rotation of the head to see the virtual object from different perspectives), the movement of the body of the at least one second user walking around, the movement of the body of the at least one second user between different postures (e.g. from sitting to standing and/or vice versa). This can be useful, for example, where users re-orientate themselves in space and settle at another location, such as for physical comfort. As mentioned earlier, in embodiments involving the movement and/or orientation of a user, at least one sensor can be configured to detect (e.g. track) the movement and/or posture of the user. Thus, the one or more processors 102 of the apparatus 100 can be configured to acquire information indicative of the movement and/or posture of the user from at least one sensor 104 according to these embodiments.

In some embodiments, a user interface may comprise a component that can be activated by the user to reset the virtual representation of their body, e.g. to an original or previous position. In cases where one or more sensors (e.g. in a tool or controller) are held by the part of the body of the at least one second user that performs the gesture, this virtual representation may comprise a virtual representation of the one or more sensors (e.g. in the tool or controller) held by the part of the body of the at least one second user that performs the gesture, such that the movement of the one or more sensors (e.g. in a tool or controller) can also be tracked.

As mentioned earlier, in some embodiments, the one or more processors 102 of the apparatus 100 may be configured to control the first virtual user interface to render the first virtual representation of the part of the body of the at least one second user only when the part of the body of the at least one second user is within a predefined volume around the virtual object rendered on the second virtual user interface. Thus, the first virtual representation of the part of the body of the at least one second user may appear (e.g. become visible) when the part of the body of the at least one second user is within the predefined volume. In some of these embodiments, the virtual representation of the body of the at least one second user may comprise a second virtual representation of the part of the body of the at least one second user only until the part of the body of the at least one second user is within the predefined volume. Thus, the second virtual representation of the part of the body of the at least one second user may disappear (e.g. become invisible) and the first virtual representation of the part of the body of the at least one second user may appear (e.g. become visible) when the part of the body of the at least one second user is within the predefined volume.

In other embodiments, the virtual representation of the body of the at least one second user may always comprise the second virtual representation of the part of the body of the at least one second user. For example, in some embodiments, even when the part of the body of the at least one second user is within the predefined volume, the virtual representation of the body of the at least one second user may comprise the second virtual representation of the part of the body of the at least one second user. Thus, in some embodiments, both the first and second virtual representations of the part of the body of the at least one second user may be rendered on the first virtual user interface at the same time.

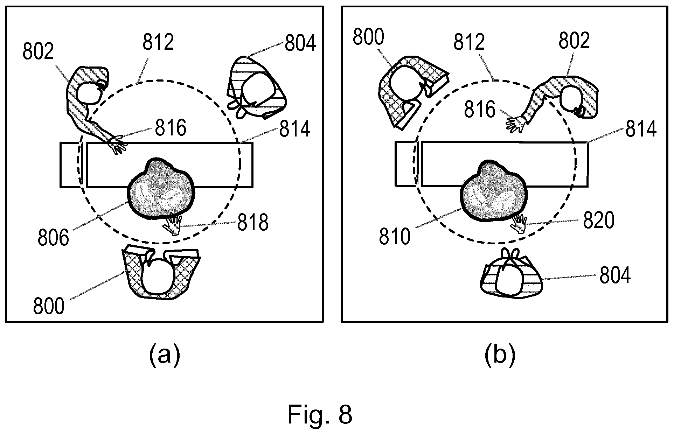

In some embodiments, the one or more processors 102 of the apparatus 100 may be configured to, if the virtual object rendered on the second virtual user interface is changed by the at least one second user (e.g. according to any of the actions mentioned earlier to which the gesture may be associated), control the first virtual user interface to render the same change to the virtual object. The change can be relative to one or more other virtual objects rendered on the respective virtual user interfaces or relative to one or more physical objects (e.g. a table, a bed, etc.) visible on the respective virtual user interfaces. Thus, all users see the same actions happening on their respective user interfaces according to these embodiments. A change is synchronized across the virtual user interfaces. An example of such an embodiment is described later with reference to Fig. 8.

In some embodiments where a change is synchronized across the virtual user interfaces, the one or more processors 102 of the apparatus 100 may be configured to adjust the first virtual representation of the part of the body of the at least one second user and/or the virtual representation of the body of the at least one second user rendered on the first user interface, such that the any further gesture performed by the first virtual representation of the part of the body of the at least one second user is in relation to the same part of the virtual object as the gesture performed by the actual part of the body of the at least one second user. For example, if the at least one second user changes the virtual object by moving it closer to their body, the first user also sees the virtual object rendered on the first user interface move closer to their own body. In this case, the first virtual representation of the part of the body of the at least one second user and/or the virtual representation of the body of the at least one second user rendered on the first user interface may be adjusted by being moved closer to the virtual object. In some embodiments, the first virtual representation of the part of the body of the at least one second user may be extended or stretched, e.g. such that the first virtual representation of the part of the body of the at least one second user can touch the virtual object.

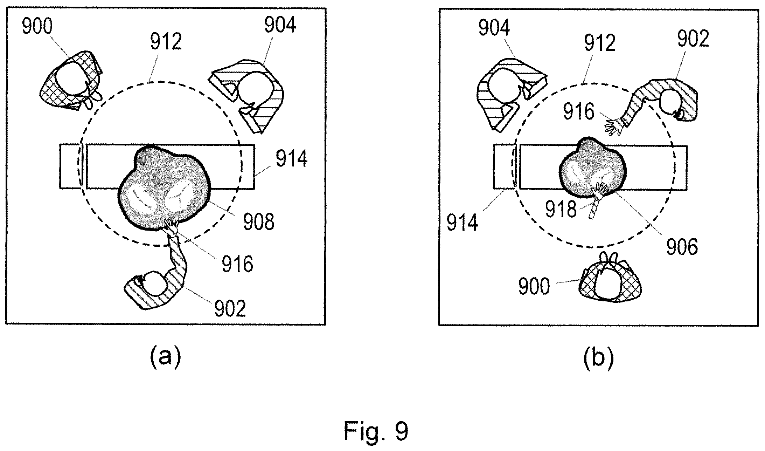

In other embodiments, the one or more processors 102 of the apparatus 100 may be configured to, if the virtual object rendered on the second virtual user interface is changed by the at least one second user, control the first virtual user interface to render the virtual object without the change to the virtual object. In this way, each user can interact with a personal copy of the virtual object and can individually change the virtual object without influencing the virtual objects viewed by other users. A change is not synchronized across the virtual user interfaces. This can improve the congruence in the perception of the users and can be beneficial in cases where the virtual object is floating and in cases where the virtual object is linked to one or more virtual and/or physical objects (e.g. a table, a bed, etc.) visible on the respective virtual user interfaces. An example of such an embodiment is described later with reference to Fig. 9.

In some embodiments, only certain changes (e.g. rotating, cut plane positioning and/or adding information) may be synchronized across the virtual user interfaces, while other changes (e.g. re-sizing and/or re-positioning) may not be synchronized across the virtual user interfaces. This can ensure that the first user sees the part of the body of the at least one second user at the correct angle and/or position in relation to the virtual object rendered on the first user interface. In some embodiments, only certain combinations of changes may be synchronized across the virtual user interfaces, while other combinations of changes may not be synchronized across the virtual user interfaces. Herein, a change to the virtual object can be a permanent or a non-permanent change to the virtual object.

Although the method has been described in relation to a first virtual user interface of a first AR, MR, or VR device used by a first user, it will be understood that the method may also be performed in relation to at least one third virtual user interface of at least one third AR, MR, or VR device used by at least one third user. Thus, at least one third user interface may be controlled in the same manner as the first user interface according to some embodiments. In this way, multiple users can see a virtual representation of the part of the body of the at least one second user performing the gesture in the manner described herein. The gestures of one user can be copied to the views of all other users. In this way, for one user, it appears that another user is performing a gesture in relation to a part of the virtual object from the same view as that one user. This allows users to unambiguously perform gestures in relation to (e.g. point to locations on) the virtual object for other users. In some embodiments involving at least one third user, a third virtual user interface may be controlled to render the virtual representation of the body of the at least one second user. The third virtual user interface may also be controlled to render a virtual representation of the body of the first user and/or the first user interface may be controlled to render a virtual representation of the body of the third user.

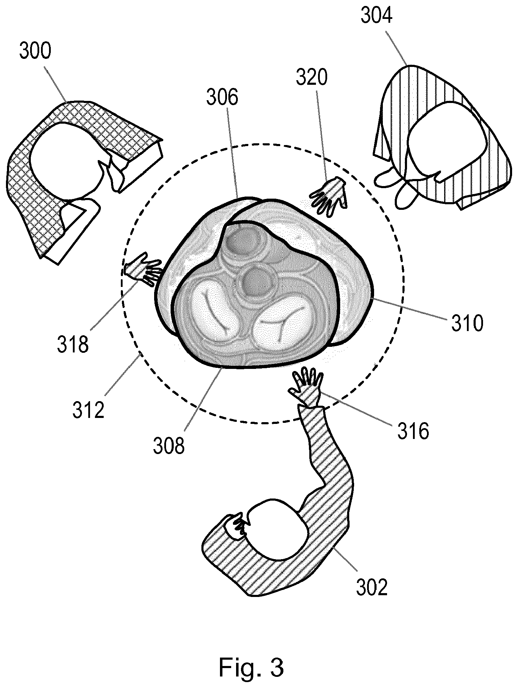

Figs. 3, 4 and 6-9 are schematic illustrations of virtual user interfaces in use according to some examples, which show the above-described principles in practice.

Fig. 3 illustrates virtual user interfaces in use according to one example. With reference to Fig. 3, a first virtual user interface of a first AR, MR, or VR device used by a first user 300 is controlled to render a first virtual object 306. In a similar manner, a second virtual user interface of a second AR, MR, or VR device used by a second user 302 is controlled to render a second virtual object 308. Similarly, a third virtual user interface of a third AR, MR, or VR device used by a third user 304 is controlled to render a third virtual object 310.

In the example illustrated in Fig. 3, the first virtual object 306, the second virtual object 308 and the third virtual object 310 are the same virtual object. Also, the first virtual user interface is controlled to render the first virtual object 306 in the same orientation with respect to the first user 300 as the second virtual object 308 is rendered on the second virtual user interface with respect to the second user 302. Similarly, the third virtual user interface is controlled to render the virtual object 310 in the same orientation with respect to the third user 304 as the second virtual object 308 is rendered on the second virtual user interface with respect to the second user 302.

With reference to the example illustrated in Fig. 3, the second user 302 moves a part 316 of their body to perform a gesture in relation to a part of the second virtual object 308 rendered on the second virtual user interface of the second AR, MR, or VR device used by the second user 302. As described earlier, information indicative of a movement of the second user 302 is acquired from at least one sensor. From the acquired information, the gesture performed by a part 316 of the body of the second user 302 is detected. In the example illustrated in Fig. 3, the part 316 of the body of the second user 302 that performs the gesture is the hand of the second user 302.

The first virtual user interface of the first AR, MR, or VR device used by the first user 300 is controlled to render a virtual representation of the part 318 of the body of the second user 302 performing the gesture, such that the gesture performed by the virtual representation of the part 318 of the body of the second user 302 is in relation to the same part of the first virtual object 306. In a similar manner, in the example illustrated in Fig. 3, the third virtual user interface of the third AR, MR, or VR device used by the third user 304 is controlled to render a virtual representation of the part 320 of the body of the second user 302 performing the gesture, such that the gesture performed by the virtual representation of the part 320 of the body of the second user 302 is in relation to the same part of the third virtual object 310.

In the example illustrated in Fig. 3, the first virtual user interface of the first AR, MR, or VR device used by the first user 300 and the third user interface of the third AR, MR, or VR device used by the third user 304 are controlled to render the respective virtual representations of the part 318, 320 of the body of the second user 302 only when the part 316 of the body of the second user 302 is within a predefined volume 312 around the second virtual object 308 rendered on the second virtual user interface. Thus, virtual representations of the part 318, 320 of the body of the second user 302 appear (e.g. become visible) when the part 316 of the body of the second user 302 is within the predefined volume 312.

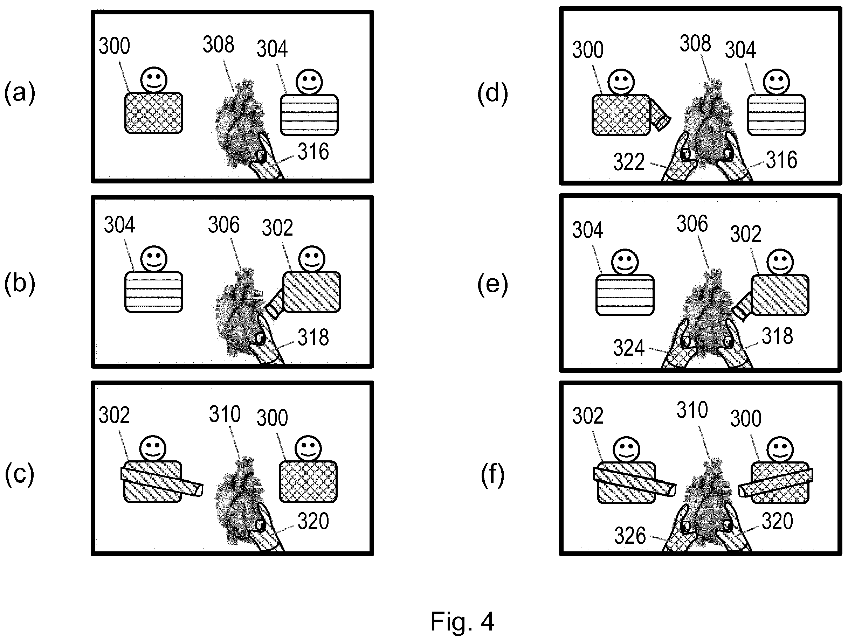

Fig. 4 illustrates virtual user interfaces in use according to another example. In more detail, Figs 4(a), (b) and (c) illustrate the same scenario that is illustrated in Fig. 3, where the second user 302 moves a part 316 of their body to perform a gesture in relation to a part of the second virtual object 308 rendered on the second virtual user interface of the second AR, MR, or VR device used by the second user 302.

Fig. 4(a) illustrates the second user interface as it is viewed by the second user 302 in such a scenario. As illustrated in Fig. 4(a), the second virtual user interface of the second AR, MR, or VR device used by the second user 302 is controlled to render the second virtual object 308 and the second user 302 moves a part 316 (which is a hand in this example) of their body to perform a gesture in relation to a part of the second virtual object 308. The second user interface is also controlled to render a virtual representation of the body of the first user 300 and a representation of the body of the third user 304.

Fig. 4(b) illustrates the first user interface as it is viewed by the first user 300 in this scenario. As illustrated in Fig. 4(b), the first virtual user interface of the first AR, MR, or VR device used by the first user 300 is controlled to render the first virtual object 306 and a virtual representation of the part 318 of the body of the second user 302 performing the gesture, such that the gesture performed by the virtual representation of the part 318 of the body of the second user 302 is in relation to the same part of the first virtual object 306. The first user interface is also controlled to render a virtual representation of the body of the second user 302 and a representation of the body of the third user 304.

Fig. 4(c) illustrates the third user interface as it is viewed by the third user 304 in this scenario. As illustrated in Fig. 4(c), the third virtual user interface of the third AR, MR, or VR device used by the third user 304 is controlled to render the third virtual object 310 and a virtual representation of the part 320 of the body of the second user 302 performing the gesture, such that the gesture performed by the virtual representation of the part 320 of the body of the second user 302 is in relation to the same part of the third virtual object 310. The third user interface is also controlled to render a virtual representation of the body of the second user 302 and a representation of the body of the first user 300.

On the other hand, Figs 4(d), (e) and (f) illustrate a different scenario, where the first user 300 also moves a part 324 (which is a hand in this example) of their body to perform a gesture in relation to a part of the first virtual object 306 rendered on the first virtual user interface of the first AR, MR, or VR device used by the first user 300. This is in addition to the second user 302 moving a part 316 (which is a hand in this example) of their body to perform a gesture in relation to a part of the second virtual object 308 rendered on the second virtual user interface of the second AR, MR, or VR device used by the second user 302, as described earlier with reference to Figs. 4(a), (b), and (c).

Fig. 4(d) illustrates the second user interface as it is viewed by the second user 302 in such a scenario. As illustrated in Fig. 4(d), the second virtual user interface of the second AR, MR, or VR device used by the second user 302 is controlled to render the second virtual object 308 and the second user 302 moves a part 316 of their body to perform a gesture in relation to a part of the second virtual object 308. The first user 300 also moves a part 324 of their body to perform a gesture in relation to a part of the first virtual object 306 rendered on the first virtual user interface of the first AR, MR, or VR device used by the first user 300. Thus, as illustrated in Fig. 4(d), the second virtual user interface is controlled to render a virtual representation of the part 322 of the body of the first user 300 performing a gesture, such that the gesture performed by the virtual representation of the part 322 of the body of the first user 300 is in relation to the same part of the second virtual object 308. The second user interface is also controlled to render a virtual representation of the body of the first user 300 and a representation of the body of the third user 304.

Fig. 4(e) illustrates the first user interface as it is viewed by the first user 300 in this scenario. As illustrated in Fig. 4(e), the first virtual user interface of the first AR, MR, or VR device used by the first user 300 is controlled to render the first virtual object 306 and the first user 300 moves a part 324 of their body to perform a gesture in relation to a part of the first virtual object 306. The second user 302 also moves a part 316 of their body to perform a gesture in relation to a part of the second virtual object 308 rendered on the second virtual user interface of the second AR, MR, or VR device used by the second user 302. Thus, as illustrated in Fig. 4(e), the first virtual user interface is controlled to render a virtual representation of the part 318 of the body of the second user 302 performing a gesture, such that the gesture performed by the virtual representation of the part 318 of the body of the second user 302 is in relation to the same part of the first virtual object 306. The first user interface is also controlled to render a virtual representation of the body of the second user 302 and a representation of the body of the third user 304.

Fig. 4(f) illustrates the third user interface as it is viewed by the third user 304 in this scenario. As illustrated in Fig. 4(f), the third virtual user interface of the third AR, MR, or VR device used by the third user 304 is controlled to render the third virtual object 310. The third virtual user interface is controlled to render a virtual representation of the part 320 of the body of the second user 302 performing the gesture, such that the gesture performed by the virtual representation of the part 320 of the body of the second user 302 is in relation to the same part of the third virtual object 310. The third virtual user interface is controlled to render a virtual representation of the part 326 of the body of the first user 300 performing the gesture, such that the gesture performed by the virtual representation of the part 326 of the body of the first user 300 is in relation to the same part of the third virtual object 310. The third user interface is also controlled to render a virtual representation of the body of the second user 302 and a representation of the body of the first user 300.

Fig. 5 illustrates two examples of how users can be positioned in a shared virtual environment.

Fig. 5(a) illustrates a top view in which a first user 400, a second user 402 and a third user 404 are co-located at the same position in relation to the virtual environment and a virtual object 406 rendered on their respective virtual user interfaces according to a first example. Thus, in Fig. 5(a), the users 400, 402, 404 have the same viewpoint of the virtual object 406 as well as the same viewpoint on the environment. As later described with reference to Fig. 6, in this first example, only the virtual representations of the bodies of the second and third users are dispositioned from their actual position in the virtual environment, in the viewpoint of the first user. The same is true for the virtual representations of the bodies of the first and third users in the viewpoint of the second user, and the virtual representations of the bodies of the first and second users in the viewpoint of the third user.

Fig. 5(b) illustrates a top view in which the first user 500, the second user 502 and the third user 504 are positioned around co-located copies of the virtual object 506, 508, 510 according to a second example. In this second example, each user has their own viewpoint on the virtual environment. As further illustrated in Fig. 7, in this second example, the virtual representation of the body of each user is co-located with the actual position of each user in the virtual environment, so each user sees the actual positions of the other users in the shared virtual environment. However, the copies of the virtual object 506, 508, 510 are rotated such that each user sees the virtual object from the same angle.

Fig. 6 illustrates virtual user interfaces in use according to the example illustrated in Fig. 5(a). Fig. 6(a) illustrates a top view of the viewpoint of the first user 400 according to the example of Fig. 5(a). In this viewpoint, the virtual representation of the body of the second user 602 and the virtual representation of the body of the third user 604 are rendered at (or portalled to) the positions as illustrated in Fig. 6 (a), while the users 402, 404 are actually co-located with the first user 400 as illustrated in Fig. 5(a). The one or more processors 102 of the apparatus 100 are configured to control a first virtual user interface of a first AR, MR, or VR device used by the first user 400 to render the virtual object 406.

As illustrated in Fig. 6(a), the one or more processors 102 of the apparatus 100 are also configured to control the first virtual user interface to render the virtual representation of the body of the second user 602 and the virtual representation of the body of the third user 604 at a predefined distance from the body of the first user 400. Thus, the first user 400 sees the virtual representation of the body of the second user 602 and the virtual representation of the body of the third user 604 at another position in the environment (e.g. another position in a room, such as at the other side of at least one other virtual object 614), while the second user 402 sees themselves from the same position in the environment as the first user 400 sees them. The position of the virtual representations of the second and third users 602, 604 is disconnected from the personal viewpoints of the respective second and third users 402, 404.

Fig. 6(b) illustrates a top view of the viewpoint of the third user 404 according to the example illustrated in Fig. 5(a). The one or more processors 102 of the apparatus 100 are configured to control a third virtual user interface of a third AR, MR, or VR device used by the third user 404 to render the virtual object 406.

As illustrated in Fig. 6(b), the one or more processors 102 of the apparatus 100 are also configured to control the third virtual user interface to render the virtual representation of the body of the second user 602 and a virtual representation of the body of the first user 600 at a predefined distance from the body of the third user 404. Thus, the third user 404 sees the virtual representation of the body of the second user 602 and the virtual representation of the body of the first user 600 at another position in the environment (e.g. another position in a room, such as at the other side of at least one other virtual object 614), while the second user 402 sees themselves from the same position in the environment as the third user 404 sees them. The position of the virtual representations of the first and second users 600, 602 is disconnected from the personal viewpoints of the respective first and second users 400, 402.

In the example illustrated in Fig. 6, the second user 402 moves a part (which in these examples is a hand) of their body to perform a gesture in relation to a part of the virtual object 406 rendered on the second virtual user interface of the second AR, MR, or VR device used by the second user 402. As described earlier, information indicative of a movement of the second user 402 is acquired from at least one sensor. From the acquired information, the gesture performed by a part of the body of the second user 402 is detected.

As illustrated in Fig. 6(a), the first virtual user interface of the first AR, MR, or VR device used by the first user 400 is controlled to render a virtual representation of the body of the second user 602 including a virtual representation of the part 616 of the body of the second user performing the gesture. As also illustrated in Fig. 6(a), the first virtual user interface of the first AR, MR, or VR device used by the first user 400 is controlled to render a virtual representation of the part 618 of the body of the second user 402 performing the gesture, such that the gesture performed by the virtual representation of the part of the body of the second user 402 is in relation to the same part of the virtual object 406. In a similar manner, as illustrated in Fig. 6(b), the third virtual user interface of the third AR, MR, or VR device used by the third user 404 is controlled to render a virtual representation of the part 620 of the body of the second user 402 performing the gesture, such that the gesture performed by the virtual representation of the part of the body of the second user 402 is in relation to the same part of the virtual object 406. In some embodiments, the first virtual user interface of the first AR, MR, or VR device used by the first user 400 and the third user interface of the third AR, MR, or VR device used by the third user 404 may be controlled to render the respective virtual representations of the part 618, 620 of the body of the second user 402 only when the part 616 of the body of the second user 402 is within a predefined volume 612 around the virtual object 406 rendered on the second virtual user interface.

As illustrated in Figs. 6(a) and (b), in some embodiments, the one or more processors 102 of the apparatus 100 may be configured to control the first virtual user interface, the second user interface, and the third user interface to render the virtual object 406 in respective first, second and third views of a virtual environment (e.g. a virtual room). In this respect, the one or more processors 102 of the apparatus 100 may be configured to control the first virtual user interface, the second user interface and the third user interface to render at least one other virtual object 614, such as a table a bed, or any other object, or any combination of objects (e.g. on a floor, wall(s) or ceiling). Thus, each user 400, 402, 404 may see a virtual environment, which may include at least one other virtual object 614. In the examples illustrated in Figs. 6(a) and (b), the first, second and third views of the virtual environment are the same. Thus, the users 400, 402, 404 see the same view of the virtual environment or, more specifically, the same view of the other virtual object 614 in this virtual environment.

In another embodiment, the users 400, 402, 404 may each see a different virtual environment. For example, in another embodiment, each user 400, 402, 404 may see a virtual environment that matches their personal preferences. However, in each virtual environment, the elements 612, 406, 600, 602, 604, 616, 618, 620 maybe rendered as described above.

Fig. 7 illustrates virtual user interfaces in use according to the example illustrated in Fig. 5(b). Fig. 7(a) illustrates a top view of the viewpoint of the first user 500 according to the example of Fig. 5(b). In this viewpoint, the virtual representation of the body of the second user 702 and the virtual representation of the body of the third user 704 are positioned in co-location with the actual positions of the respective users 502, 504 illustrated in Fig. 5(b) in the virtual environment. The one or more processors 102 of the apparatus 100 are configured to control a first virtual user interface of a first AR, MR, or VR device used by the first user 700 to render the virtual object 506. As illustrated in Fig. 7(a), the one or more processors 102 of the apparatus 100 are also configured to control the first virtual user interface to render a virtual representation of the body of the second user 702 and a virtual representation of the body of the third user 704 at a predefined distance from the body of the first user 500. The position of the virtual representations of bodies of the users 702, 704 illustrated in Fig. 7(a) is co-located with the actual positions of the users 502, 504 illustrated in Fig. 5(b) in the virtual environment in the personal viewpoints of the respective users.

Fig. 7(b) illustrates a top view of the viewpoint of the third user 504 according to the example illustrated in Fig. 5(b). The one or more processors 102 of the apparatus 100 are configured to control a third virtual user interface of a third AR, MR, or VR device used by the third user 504 to render the virtual object 510. The one or more processors 102 of the apparatus 100 are configured to control the first virtual user interface to render the virtual object 506 in the same orientation with respect to the first user 500 as the virtual object 510 is rendered on the third virtual user interface with respect to the third user 504. Although not illustrated in Figs. 7(a) and (b), the one or more processors 102 of the apparatus 100 are also configured to control the second virtual user interface to render the virtual object in the same orientation with respect to the second user 502 as the virtual object 506, 510 is rendered on the first virtual user interface with respect to the first user 500 and the third virtual user interface with respect to the third user 504. Thus, the users 500, 502, 504 see the virtual object in the same orientation.

As illustrated in Fig. 7(b), the one or more processors 102 of the apparatus 100 are also configured to control the third virtual user interface to render the virtual representation of the body of the second user 702 and a virtual representation of the body of the first user 700 at a predefined distance from the body of the third user 504. The position of the virtual representations of the bodies of the users 700, 702 illustrated in Fig. 7(b) is co-located with the actual positions of the users 500, 502 illustrated in Fig. 5(b) in the virtual space in the personal viewpoints of the respective users.

In the example illustrated in Fig. 7, the second user 502 moves a part (which in these examples is a hand) of their body to perform a gesture in relation to a part of the second virtual object rendered on the second virtual user interface of the second AR, MR, or VR device used by the second user 502. As described earlier, information indicative of a movement of the second user 502 is acquired from at least one sensor. From the acquired information, the gesture performed by a part of the body of the second user 502 is detected.

As illustrated in Fig. 7(a), the first virtual user interface of the first AR, MR, or VR device used by the first user 500 is controlled to render a virtual representation of the body of the second user 702 including a virtual representation of the part 716 of the body of the second user performing the gesture. As also illustrated in Fig. 7(a), the first virtual user interface of the first AR, MR, or VR device used by the first user 500 is controlled to render a virtual representation of the part 718 of the body of the second user 502 performing the gesture, such that the gesture performed by the virtual representation of the part 718 of the body of the second user 502 is in relation to the same part of the first virtual object 506. In a similar manner, as illustrated in Fig. 7(b), the third virtual user interface of the third AR, MR, or VR device used by the third user 504 is controlled to render a virtual representation of the part 720 of the body of the second user 502 performing the gesture, such that the gesture performed by the virtual representation of the part 720 of the body of the second user 502 is in relation to the same part of the third virtual object 510. In some embodiments, the first virtual user interface of the first AR, MR, or VR device used by the first user 500 and the third user interface of the third AR, MR, or VR device used by the third user 504 may be controlled to render the respective virtual representations of the part 718, 720 of the body of the second user 502 only when the part of the body of the second user 502 is within a predefined volume 712 around the virtual object rendered on the second virtual user interface.

As illustrated in Figs. 7(a) and (b), in some embodiments, the one or more processors 102 of the apparatus 100 may be configured to control the first virtual user interface, the second user interface, and the third user interface to render the virtual object in respective first, second and third views of a virtual environment (e.g. a virtual room). In this respect, the one or more processors 102 of the apparatus 100 may be configured to control the first virtual user interface, the second user interface and the third user interface to each render at least one other virtual object 714, such as a table a bed, or any other object, or any combination of objects (e.g. on a floor, wall(s) or ceiling). Thus, each user 500, 502, 504 may see the same virtual environment, which may include at least one other virtual object 714.

In the examples illustrated in Figs. 7(a) and (b), the first, second and third views of the virtual environment are different. For example, as illustrated in Figs. 7(a) and (b), the first view of (e.g. the at least one other virtual object 714 in) the virtual environment is rotated around the virtual object 506 relative to a third view (e.g. the at least one other object 714 in) of the virtual environment in which the virtual object 510 is rendered on the third virtual user interface. Thus, the users 500, 502, 504 see different (rotated) views of the virtual environment or, more specifically, different (rotated) views of the at least one other virtual object 714 in this virtual environment.

Fig. 8 illustrates virtual user interfaces in use according to another example. In particular, Fig. 8(a) illustrates a top view of the viewpoint of the first user 800. In Fig. 8(a), the one or more processors 102 of the apparatus 100 are configured to control the first virtual user interface of the first AR, MR, or VR device used by the first user 800 to render the virtual representation of the body of a second user 802 and a virtual representation of a body of a third user 804 at a predefined distance from the body of the first user 800. The one or more processors 102 of the apparatus 100 are configured to control the first virtual user interface to render the virtual object 806.

Fig. 8(b) illustrates a top view of the viewpoint of the third user 804. In Fig. 8(b), the one or more processors 102 of the apparatus 100 are configured to control a third virtual user interface of a third AR, MR, or VR device used by the third user 804 to render the virtual representation of the body of the second user 802 and a virtual representation of the body of the first user 800 at a predefined distance from the body of the third user 804. The one or more processors 102 of the apparatus 100 are configured to control the third virtual user interface to render the virtual object 810.

The one or more processors 102 of the apparatus 100 are configured to control the first virtual user interface to render the virtual object 806 in the same orientation with respect to the first user 800 as the virtual object 810 is rendered on the third virtual user interface with respect to the third user 804. Although not illustrated in Figs. 8(a) and (b), the one or more processors 102 of the apparatus 100 are also configured to control the second virtual user interface to render the virtual object in the same orientation with respect to the second user 802 as the virtual object 806, 810 is rendered on the first virtual user interface with respect to the first user 800 and the third virtual user interface with respect to the third user 804.

As illustrated in Figs. 8(a) and (b), in this example, the second user 802 moves a part 816 (which in these examples is a hand) of their body to perform a gesture in relation to a part of the second virtual object rendered on the second virtual user interface of the second AR, MR, or VR device used by the second user 802. As described earlier, information indicative of a movement of the second user 802 is acquired from at least one sensor. From the acquired information, the gesture performed by a part 816 of the body of the second user 802 is detected.

As illustrated in Fig. 8(a), the first virtual user interface of the first AR, MR, or VR device used by the first user 800 is controlled to render a virtual representation of the part 818 of the body of the second user 802 performing the gesture, such that the gesture performed by the virtual representation of the part of the body of the second user 802 is in relation to the same part of the first virtual object 806. In a similar manner, as illustrated in Fig. 8(b), the third virtual user interface of the third AR, MR, or VR device used by the third user 804 is controlled to render a virtual representation of the part 820 of the body of the second user 802 performing the gesture, such that the gesture performed by the virtual representation of the part of the body of the second user 802 is in relation to the same part of the third virtual object 810. In some embodiments, the first virtual user interface of the first AR, MR, or VR device used by the first user 800 and the third user interface of the third AR, MR, or VR device used by the third user 804 may be controlled to render the respective virtual representations of the part 818, 820 of the body of the second user 802 only when the part 816 of the body of the second user 802 is within a predefined volume 812 around the virtual object 808 rendered on the second virtual user interface.

As illustrated in Figs. 8(a) and (b), in some embodiments, the one or more processors 102 of the apparatus 100 may be configured to control the first virtual user interface, the second user interface, and the third user interface to render the virtual object 806, 810 in respective first, second and third views of a virtual environment (e.g. a virtual room). In this respect, the one or more processors 102 of the apparatus 100 may be configured to control the first virtual user interface, the second user interface and the third user interface to render at least one other virtual object 814, such as a table a bed, or any other object, or any combination of objects (e.g. on a floor, wall(s) or ceiling). In the examples illustrated in Figs. 8(a) and (b), the first, second and third views of the virtual environment are the same. Thus, the users 800, 802, 804 see the same view of the virtual environment or, more specifically, the same view of the other virtual object 814 in this virtual environment.

The gesture performed by the part 816 of the body of the second user 802 changes the virtual object rendered on the second virtual user interface of a second AR, MR or VR device used by the second user 802. In this example, the change is to move the virtual object closer to the second user 802. As illustrated in Fig. 8(a), the one or more processors 102 of the apparatus 100 in this example are configured to control the first virtual user interface to render the same change to the virtual object 806 rendered on the first virtual user interface. Similarly, as illustrated in Fig. 8(b), the one or more processors 102 of the apparatus 100 in this example are configured to control the third virtual user interface to render the same change to the virtual object 810 rendered on the third virtual user interface.

Fig. 9 illustrates virtual user interfaces in use according to another example. In particular, Fig. 9(a) illustrates a top view of the viewpoint of the second user 902. In Fig. 9(a), the one or more processors 102 of the apparatus 100 are configured to control the first virtual user interface of the first AR, MR, or VR device used by the second user 902 to render the virtual representation of the body of a first user 900 and a virtual representation of a body of a third user 904 at a predefined distance from the body of the second user 902. The one or more processors 102 of the apparatus 100 are configured to control the second virtual user interface to render the virtual object 908.

Fig. 9(b) illustrates a top view of the viewpoint of the first user 900. In Fig. 9(b), the one or more processors 102 of the apparatus 100 are configured to control a first virtual user interface of a first AR, MR, or VR device used by the first user 900 to render the virtual representation of the body of the second user 902 and a virtual representation of the body of the third user 904 at a predefined distance from the body of the first user 900. The one or more processors 102 of the apparatus 100 are configured to control the first virtual user interface to render the virtual object 906.

The one or more processors 102 of the apparatus 100 are configured to control the first virtual user interface to render the virtual object 906 in the same orientation with respect to the first user 900 as the virtual object 908 is rendered on the second virtual user interface with respect to the second user 902. Although not illustrated in Figs. 9(a) and (b), the one or more processors 102 of the apparatus 100 may also be configured to control the third virtual user interface to render the virtual object in the same orientation with respect to the third user 904 as the virtual object 906, 908 is rendered on the first virtual user interface with respect to the first user 900 and the second virtual user interface with respect to the second user 902.

As illustrated in Fig. 9(a), in this example, the second user 902 moves a part 916 (which in these examples is a hand) of their body to perform a gesture in relation to a part of the virtual object 908 rendered on the second virtual user interface of the second AR, MR, or VR device used by the second user 902. As described earlier, information indicative of a movement of the second user 902 is acquired from at least one sensor. From the acquired information, the gesture performed by a part 916 of the body of the second user 902 is detected.

As illustrated in Fig. 9(b), the first virtual user interface of the first AR, MR, or VR device used by the first user 900 is controlled to render a virtual representation of the part 918 of the body of the second user 902 performing the gesture, such that the gesture performed by the virtual representation of the part of the body of the second user 902 is in relation to the same part of the virtual object 906 rendered on the first user interface. Although not illustrated in Fig. 9, in a similar manner, the third virtual user interface of the third AR, MR, or VR device used by the third user 904 may be controlled to render a virtual representation of the part of the body of the second user performing the gesture, such that the gesture performed by the virtual representation of the part of the body of the second user 902 is in relation to the same part of the virtual object rendered on the third virtual user interface.

In some embodiments, the first virtual user interface of the first AR, MR, or VR device used by the first user 900 and the third user interface of the third AR, MR, or VR device used by the third user 904 may be controlled to render the respective virtual representations of the part 918 of the body of the second user 902 only when the part 916 of the body of the second user 902 is within a predefined volume 912 around the virtual object 908 rendered on the second virtual user interface.

As illustrated in Figs. 9(a) and (b), in some embodiments, the one or more processors 102 of the apparatus 100 may be configured to control the first virtual user interface and the second user interface to render the virtual object 906, 910 in respective first and second views of a virtual environment (e.g. a virtual room). In this respect, the one or more processors 102 of the apparatus 100 may be configured to control the first virtual user interface and the second user interface to render at least one other virtual object 914, such as a table a bed, or any other object, or any combination of objects (e.g. on a floor, wall(s) or ceiling). In the examples illustrated in Figs. 9(a) and (b), the first and second views of the virtual environment are the same. Although not illustrated in Fig. 9, the third user interface may be controlled in the same manner. Thus, the users 900, 902, 904 see the same view of the virtual environment or, more specifically, the same view of the other virtual object 914 in this virtual environment.

The gesture performed by the part 916 of the body of the second user 902 changes the virtual object rendered on the second virtual user interface of a second AR, MR or VR device used by the second user 902. In this example, the change is to magnify the virtual object 908. More specifically, the change in this example is to magnify the virtual object 908 relative to at least one other virtual object 914 (e.g. a table, bed or any other object). As illustrated in Fig. 9(b), the one or more processors 102 of the apparatus 100 in this example are configured to control the first virtual user interface to render the virtual object 906 without the change to the virtual object 906 rendered on the first virtual user interface. Similarly, although not illustrated, the one or more processors 102 of the apparatus 100 in this example may also be configured to control the third virtual user interface to render the virtual object without the change to the virtual object rendered on the third virtual user interface.

There is thus provided herein an improved technique for rendering a virtual object on a virtual user interface of an AR, MR, or VR device, which addresses the limitations associated with the existing techniques. The improved technique can be useful in a variety of applications in which multiple users are required to discuss the same object. Some examples of such applications are in the medical domain and include, for example, tumor board teleconferencing in which a body organ with a tumor may be discussed by multiple oncologists/surgeons, heart team meetings in which valve repair or replacement may be discussed (in a board setting) or planned, image guided therapy in which multiple medical staff can study a body of a patient (e.g. virtually organs may hover above the patient for viewing), remote assistance or guidance scenarios (e.g. remote ultrasound) in which a remote expert provides instructions to a local, less trained clinician, or any other collaborative work setup where multiple people work together on an object.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An apparatus (100) for rendering a virtual object on a virtual user interface of an augmented reality, AR, mixed reality, MR, or virtual reality, VR, device, the apparatus (100) comprising:
one or more processors (102) configured to:
control a first virtual user interface of a first AR, MR, or VR device used by a first user (300, 400, 500, 800, 900) to render a virtual object;
acquire, from at least one sensor (104), information indicative of a movement of at least one second user (302, 402, 502, 802, 902);
detect, from the acquired information, a gesture performed by a part of the body of the at least one second user (302, 402, 502, 802, 902) in relation to a part of the virtual object rendered on a second virtual user interface of a second AR, MR, or VR device used by the at least one second user (302, 402, 502, 802, 902); and
control the first virtual user interface to render a first virtual representation of the part (318, 618, 718, 818, 918) of the body of the at least one second user (302, 402, 502, 802, 902) performing the gesture, such that the gesture performed by the first virtual representation of the part (318, 618, 718, 818, 918) of the body of the at least one second user (302, 402, 502, 802, 902) is in relation to the same part of the virtual object.

2. The apparatus (100) as claimed in claim 1, wherein:
the one or more processors (102) are configured to:
control the first virtual user interface to render the virtual object in the same orientation with respect to the first user (300, 400, 500, 800, 900) as the virtual object is rendered on the second virtual user interface with respect to the at least one second user (302, 402, 502, 802, 902).

3. The apparatus (100) as claimed in any of the preceding claims, wherein:
the one or more processors (102) are configured to:
acquire a mapping of a position of the part of the body of the at least one second user (302, 402, 502, 802, 902) to a position of the part of the virtual object; and
control the first virtual user interface to render the first virtual representation of the part of the body of the at least one second user (302, 402, 502, 802, 902) based on the mapping, such that the gesture performed by the first virtual representation of the part of the body of the at least one second user (302, 402, 502, 802, 902) is in relation to the same part of the virtual object.

4. The apparatus (100) as claimed in any of the preceding claims, wherein:
the one or more processors (102) are configured to:
control the first virtual user interface to render a virtual representation of the body of the at least one second user (302, 402, 502, 802, 902).

5. The apparatus (100) as claimed in claim 4, wherein:
the one or more processors (102) are configured to:
control the first virtual user interface to render the virtual representation of the body of the at least one second user (302, 402, 502, 802, 902) at the same location as the body of the first user (300, 400, 500, 800, 900) or at a predefined distance from the body of the first user (300, 400, 500, 800, 900).

6. The apparatus (100) as claimed in claim 4 or 5, wherein:
the one or more processors (102) are configured to:
control the first virtual user interface to render a posture and/or movement of the virtual representation of the body of the at least one second user (302, 402, 502, 802, 902) to match the posture and/or movement of the body of the at least one second user (302, 402, 502, 802, 902).

7. The apparatus (100) as claimed in any of the preceding claims, wherein:
the one or more processors (102) are configured to:
control the first virtual user interface to render the first virtual representation of the part of the body of the at least one second user (302, 402, 502, 802, 902) only when the part of the body of the at least one second user (302, 402, 502, 802, 902) is within a predefined volume (312, 412, 512, 612, 712, 812, 912) around the virtual object rendered on the second virtual user interface.

8. The apparatus (100) as claimed in claim 7, when dependent on claim 4, 5 or 6, wherein:
the virtual representation of the body of the at least one second user (302, 402, 502, 802, 902) comprises a second virtual representation of the part of the body of the at least one second user (302, 402, 502, 802, 902) only until the part of the body of the at least one second user (302, 402, 502, 802, 902) is within the predefined volume (312, 412, 512, 612, 712, 812, 912).

9. The apparatus (100) as claimed in any of the preceding claims, wherein:
the one or more processors (102) are configured to:
control the first virtual user interface to render the virtual object in a first view of a virtual environment.

10. The apparatus (100) as claimed in claim 9, wherein:
the first view of the virtual environment is the same as a second view of the virtual environment in which the virtual object is rendered on the second virtual user interface; or
the first view of the virtual environment is rotated around the virtual object relative to a second view of the virtual environment in which the virtual object is rendered on the second virtual user interface.

11. The apparatus (100) as claimed in claim 10, wherein:
the first view of the virtual environment is rotated around the virtual object according to the position of a virtual representation of the first user rendered on the second virtual user interface.

12. The apparatus (100) as claimed in any of the preceding claims, wherein:
the one or more processors (102) are configured to:
if the virtual object rendered on the second virtual user interface is changed by the at least one second user (902):
control the first virtual user interface to render the same change to the virtual object; or
control the first virtual user interface to render the virtual object (906) without the change to the virtual object.

13. The apparatus (100) as claimed in any of the preceding claims, wherein:
the first AR, MR, or VR device comprises a first head-mounted AR, MR, or VR device; and/or
the second AR, MR, or VR device comprises a second head-mounted AR, MR, or VR device.

14. A computer-implemented method (200) for rendering a virtual object on a virtual user interface of an augmented reality, AR, mixed reality, MR, or virtual reality, VR, device, the method comprising:
controlling (202) a first virtual user interface of a first AR, MR, or VR device used by a first user to render a virtual object;
acquiring (204), from at least one sensor, information indicative of a movement of at least one second user;
detecting (206), from the acquired information, a gesture performed by a part of the body of the at least one second user in relation to a part of the virtual object rendered on a second virtual user interface of a second AR, MR, or VR device used by the at least one second user; and
controlling (208) the first virtual user interface to render a first virtual representation of the part of the body of the at least one second user performing the gesture, such that the gesture performed by the first virtual representation of the part of the body of the at least one second user is in relation to the same part of the virtual object.

15. A computer program product comprising a computer readable medium, the computer readable medium having a computer readable code embodied therein, the computer readable code being configured such that, on execution by a suitable computer or processor, the computer or processor is caused to perform the method as claimed in claim 14.
